# EUROPEAN PATENT SPECIFICATION

(11) **EP 1 923 613 B1**
(45) Date of publication and mention of the grant of the patent: **07.01.2009**
(21) Application number: 06425778.5
(22) Date of filing: 14.11.2006
(51) Int. Cl.: F16K 31/385

(54) **A valve device, in particular for use in agricultural activities**
Ventilvorrichtung, insbesondere zur landwirtschaftlichen Verwendung
Dispositif de soupape, en particulier pour usage agricole

(43) Date of publication of application: 21.05.2008
(73) Proprietor: Braglia SRL, 42029 Masone RE (IT)
(72) Inventor: Braglia, Vitaliano, 42100 Gavasseto - Reggio Emilia (IT)
(74) Representative: Gotra, Stefano

(56) References cited:
- GB-A- 1 431 695
- US-A- 2 131 271
- US-A- 2 149 928
- US-A- 2 889 849
- US-A- 3 424 430
- US-A- 3 954 251
- US-A- 4 316 480

## Description

The invention relates to a valve device, in particular for agricultural applications.

The invention can be used in the agricultural sector, and in particular it is destined for agricultural activities related to safeguarding and weeding the crops.

As is known, weeding operations are normally carried out using one or more manifolds which can be connected to a source supplying one or more weed-killing fluids. Each manifold is defined by a plurality of valve devices each having an outlet conduit, or delivery conduit, connectable to special irrigation/dispensing and/or draining systems.

Each valve device exhibits a single-block body internally of which the conduits necessary for the functioning thereof are afforded. A valve is arranged internally of the single-block body, which valve can be commuted between a closed condition, in which the supplied fluid transits internally of a main conduit, and an open condition, in which the supplied fluid flows through the respective outlet and delivery conduit.

Generally the commutation of the valve of each valve device is activated by means of a respective gear reducer, which operates in the single-block body. Each gear reducer or like activating organ is appropriately connected to an electrical supply via one or more electric cables.

An example of such device can be seen in document US 2 149 928, which discloses a device according to the preamble of claim 1. Another example of such device is described in document GB 1431695.

Although the known valve devices enable conveying of weed-killing fluids to one or more outlet and delivery conduits, the Applicant has noted that there exist some drawback, mainly relating to the immediate of any breakages and/or malfunctioning of the devices themselves, to maintenance and repair operations thereof, as well as to costs connected to the checking and maintenance operations.

In particular it has been found that the above-mentioned valve devices are subject to periodical and frequent breakdowns due to wear on the valves as well as to accumulations of solid particles internally of the conduits, requiring continual inspection and/or maintenance operations.

Both the inspections and the maintenance operations require specialised technical assistance in order for the malfunctioning single-block body of the valve to be dismantled for the conditions of each component to be checked and replaced if necessary. In fact, the valve devices are not accessible from outside and require the intervention of technical assistant even when the cause of malfunctioning depends on a problem of small entity, or on an accumulation of solid material internally of the conduits.

Also noteworthy is that the cause of malfunctioning in the above-mentioned devices can also depend on the absence of electrical supply due to a localised fault in the cabling or the electrical connectors. However, even in this case the impossibility of identifying the true cause of the malfunctioning leads to a need to call out specialised technical assistance.

Naturally the inspection and/or maintenance carried out by the technical assistant requires long waiting times which run from when the fault in the valve device is noticed to the time when it is verified and/or repaired.

The technical aim at the basis of the present invention is to invent a valve device which is able to obviate the cited drawbacks.

In the ambit of the technical aim, an important further aim of the invention is to provide a valve device which is easily accessible from outside in order to permit both inspection and if necessary intervention for maintenance or replacement of specific components.

A further aim of the invention is to signal the presence or absence of the electrical supply required for commutation of the valve means operating internally of each valve device.

The specified set technical aim and the other specified aims are attained by a valve device, in particular for agricultural weeding activities according to what is described in the accompanying claims.

A description of the valve device of the invention will now be made by way of non-limiting example.
Figure 1 is a lateral perspective view of a valve device, in particular for agricultural weeding activities, in which the body of the device is substantially closed and a locking lever is illustrated in two operative positions;
Figure 2 is a further lateral view of the device of figure 1 in which the device body is open;
Figure 3 is a front view of the device of the previous figures;
Figure 4 is a longitudinal section of the device of the previous figures, made according to line IV-IV of figure 3;
Figure 5 is a transversal section of the device of the preceding figures, made along line V-V of figure 1;
Figure 6 is a diagram of the conduits of the device of the preceding figures in a first working condition;
Figure 7 is a diagram of the conduits of the device of the preceding figures in a second working condition;

With reference to the figures of the drawings, 1 denotes in its entirety a valve device, in particular for agricultural weeding applications, in agreement with the present invention.

As can be seen in the figures, the device 1 comprises a body 2 exhibiting a first portion 2a and a second portion 2b which are reciprocally engaged in order to define a main conduit 3 which is connectable to a supply source (not shown) of one or more weedkilling fluids and an outlet conduit 4 for conveying the weedkiller fluid in transit in the main conduit 3 towards a dispenser conduit (not illustrated).

The first portion 2a and the second portion 2b of the body 2 also define a valve body 5 interpositioned between the main conduit 3 and the outlet conduit 4. The valve body 5 contains a valve 6 commutable between a closed condition, in which a weedkiller fluid, transiting through the main conduit 3, does not flow through the outlet conduit 4, and an open configuration, in which the weedkiller fluid, transiting through the main conduit 3, flows through the outlet conduit 4.

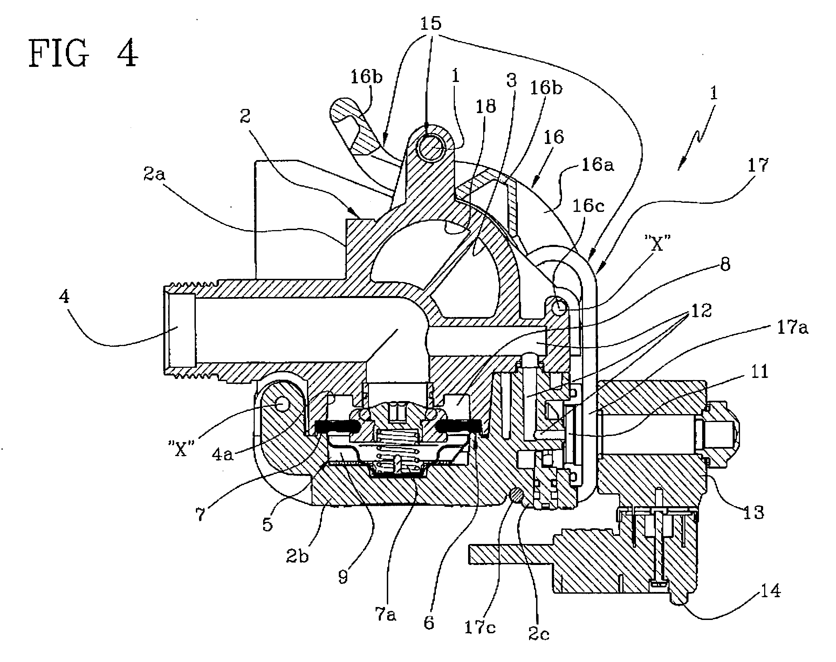

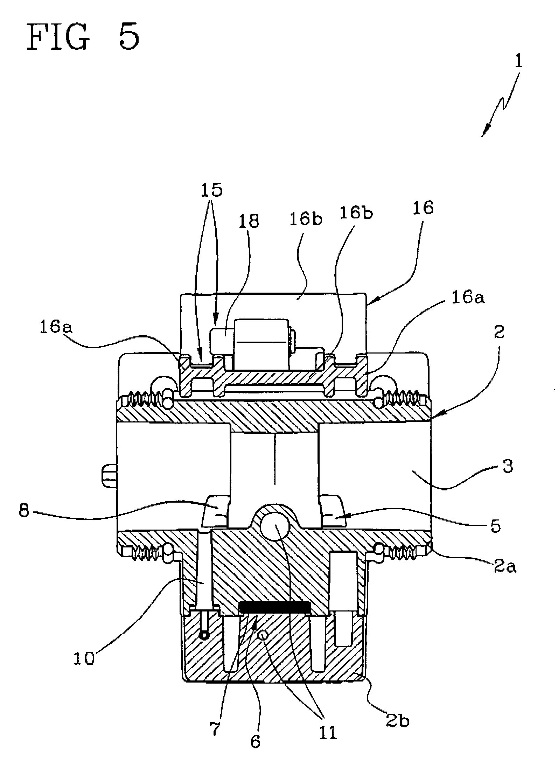

Preferably the valve 6 comprises at least a membrane 7 (figures 4 and 5) which during operation is interpositioned between the main conduit 3 and the outlet conduit 4. The membrane 7 divides the valve chamber 5 into two chambers 8, 9, each in fluid communication with the main conduit 3.

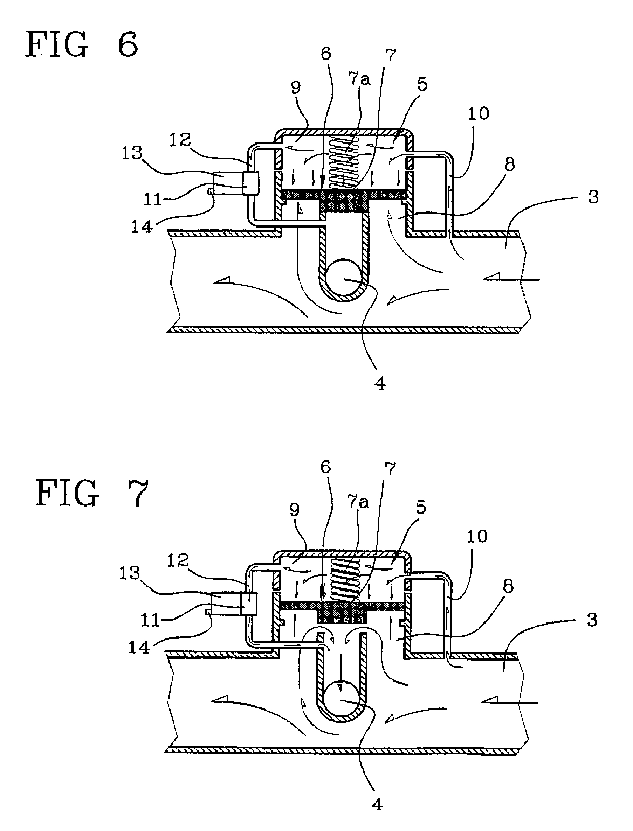

As illustrated in the diagrams of figures 6 and 7, a first chamber 8 is directly in fluid communication with the main conduit 3, while a second chamber 9 is in fluid communication with the main conduit 3 by means of a connection conduit 10 (visible also in figure 5) which extends at least partially through the first portion 2a and at least partially through the second portion 2b.

As both chambers 8, 9 of the valve body 5 are in fluid communication with the main conduit 3, the weedkiller fluid in supply occupies both the first chamber 8 and the second chamber 9, acting on the membrane 7 of the valve 6 at a same pressure level.

As can be seen in figures 6 and 7, the membrane 7 surface exposed to the weedkiller fluid internally of the first chamber 8 exhibits a smaller area than the surface of the membrane 7 which is exposed to the weedkiller fluid occupying the inside of the second chamber 9 of the valve chamber 5. Consequently, with a same pressure and different surfaces, the membrane 7 is kept in the closed condition, i.e. it is held against an inlet mouth 4a of the outlet conduit 4 so that the weedkiller fluid transiting through the main conduit 3 is unable to flow through the outlet conduit 4.

Again with reference to the diagrams of figures 6 and 7, the second chamber 9 of the valve chamber 5 is advantageously in fluid communication with the outlet conduit 4 by means of a breather conduit 12 normally kept closed by a pilot valve 11. The pilot valve 11 is preferably controlled by an actuator organ 13, preferably of an electromagnetic type and operatively associable with the body 2 of the device 1, so that on switching on an electrical supply the pilot valve 11 opens the breather valve 12, enabling the weedkiller fluid present inside the second chamber 9 to reach the outlet chamber 4.

When the pilot valve 11 opens the breather conduit 12, the weedkiller fluid in the second chamber 9 flows out and into the outlet conduit 4. Consequently the weedkiller fluid in the first chamber 8 pushes the membrane 7 away from the inlet mouth 4a of the outlet conduit 4, overcoming the resistance of a spring 7a interposed between the membrane 7 and the second portion 2b of the body 2. The membrane 7 is thus displaced from the closed condition (figure 6) into the open condition (figure 7) and the weedkiller fluid coming from the main conduit 3 flows into the outlet conduit 4 through the inlet mouth 4a of the outlet conduit 4.

When the electrical supply is switched off, the pilot valve 11 occludes the breather conduit 12, resetting the closed condition of the membrane 7 internally of the valve chamber 5.

The actuator organ 13 is advantageously provided with at least a light emitter 14, preferably a LED, which displays and signals the presence or absence of an electrical supply. With the light emitter 14 it is therefore possible to check if the actuator organ 14 is correctly electrically supplied. Switching the light emitter 14 on or off therefore signals the correct functioning of the electrical supply or the presence of a fault in the cabling or the electrical supply connections.

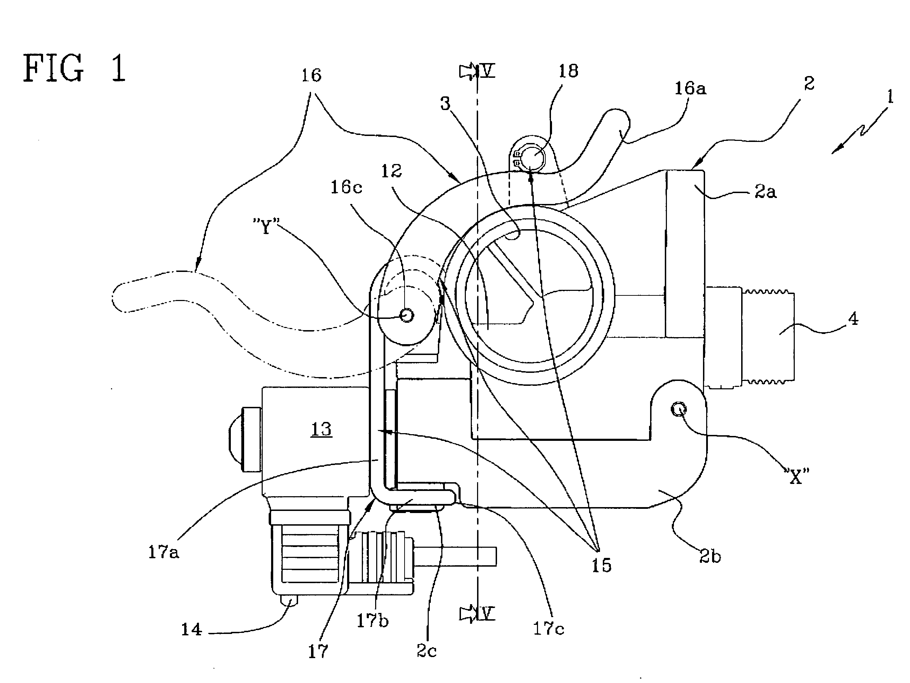

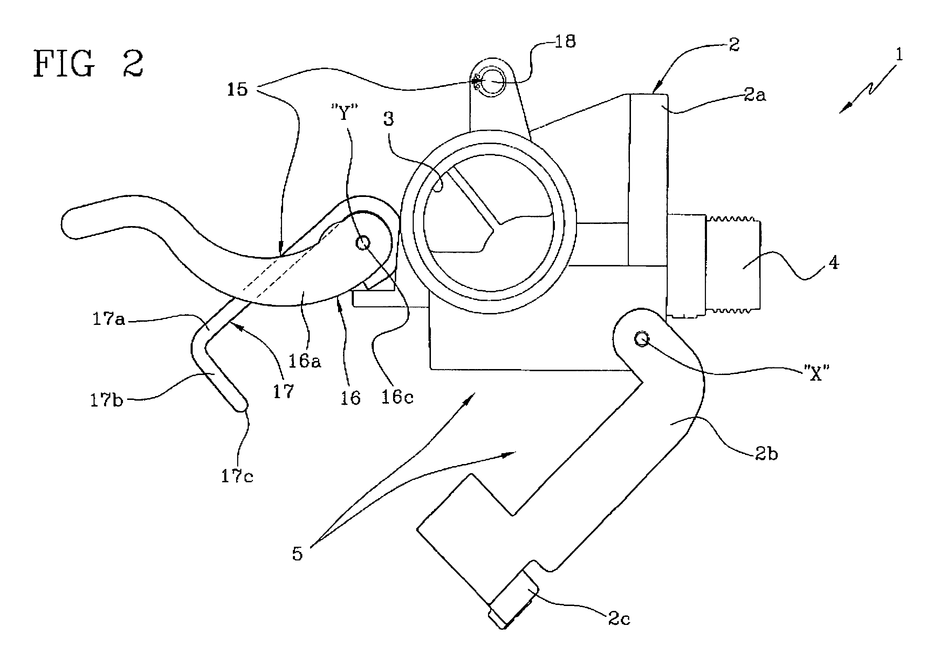

Still with reference to figure 1 or figure 2, the above-mentioned first and second portions 2a, 2b of the body 2 are advantageously mobile with respect to one another between a closed position, in which the valve chamber 5 is sealedly closed (figure 1) and an open position in which the valve chamber 5 is open and accessible from the outside (figure 2). The second portion 2b of the body 2 is hinged to the first portion 2a, so that the second portion 2b is rotatable about a hinge axis X between the first and second positions.

As can be seen in figures from 1 to 5, the device 1 further comprises means for blocking 15 which are operatively connected to the body 2 in order to keep the second portion 2b in the closed position.

The means for blocking 15 comprise a blocking lever 16 which is operatively engaged to the first portion 2a of the body 2 so as to be mobile between a blocking position (figure 1), in which the blocking lever 16 adheres at least partially to the first portion 2a and acts on the second portion 2b to maintain the second portion 2b in the closed position, and an unblocking position (figure 1, shaped in a broken line) in which the blocking lever 16 does not adhere to the first portion 2a and the second portion 2b is free to move.

In particular, the blocking lever 16 is hinged to the first portion 2a of the body 2 in order to rotate about a rotation axis Y which is substantially parallel to the hinge axis X and to the main conduit 3, between the blocking position and the unblocking position.

Still with reference to figures from 1 to 4, the means for blocking further comprise a hook element 17 connected to the blocking lever 16 and engageable to the second portion 2b in order to keep the second portion 2b in the closed position when the blocking lever 16 is arranged in the blocking position.

The hook element 17 is preferably hinged to the blocking lever 16 at the hinge point thereof to the first portion 2a of the body 2.

In more detail, the blocking lever 16 comprises a pair of arms 16a developing substantially parallel to one another, united by at least a crossbar 16b, preferably two in number. The blocking lever 16 comprises at least a hinge pin 16c, extending between the arms 16a on an opposite side with respect to the crossbars 16b. The hinge pin 16c engages in a respective hinge seating afforded in the first portion 2a in proximity of the main conduit 3.

The hook element 17 exhibits a pair of arms 17a extending substantially parallel to one another, each being engaged to a respective arm 16a of the blocking lever 16 at the position of the hinge pin 16c. Each arm 17a of the hook element 17 exhibits, on the opposite side to the blocking lever 16, a terminal portion 17b which is engaged to the transversal terminal portion 17b of the other arm 17a by means of a hook crosspiece 17c.

As can be seen in figures 1 and 4, when the blocking lever 16 is in the blocking position, the hook crosspiece 17c of the hook element 17 engages a hooking relief 2c fashioned externally on the second portion 2b on the opposite side to the main conduit 3.

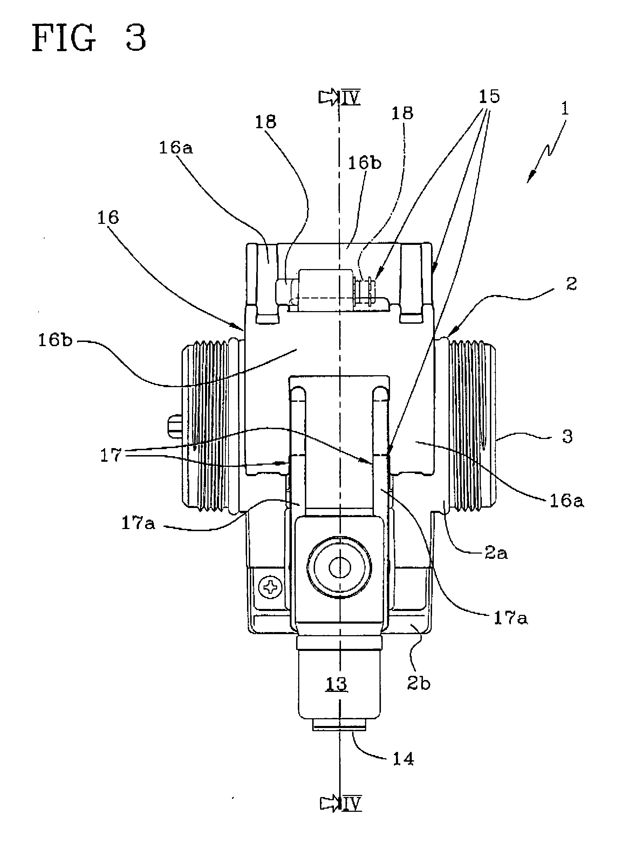

The means for blocking 15 advantageously comprise a safety catch 18 operatively engaged to the first portion 2a of the body 2 for holding the blocking lever 16 in the blocking position. The safety catch 18 is mobile between an interfering position (figure 3, continuous line), in which it holds the blocking lever 16 in the blocking position, and a disengaged position (figure 3, broken line), in which the blocking lever 16 is free to move. The safety catch 18 is preferably provided with at least an elastic recall element (not illustrated in the figures of the drawings) which is predisposed to bring the safety catch 18 into the interfering position.

As can be seen in figures 1 and 4, the above-mentioned hook element 17 is further predisposed to keep, between the arms 17a thereof, the actuator organ 13 engaged to the second portion 2b of the body 2 when the blocking lever 16 is arranged in the blocking position. At the moment when the actuator organ 13 needs to be dismounted and/or replaced, the blocking lever 16 must be brought from the blocking position into the unblocking position in order to disengage the hook element 17 from the obturator organ 13 which can then be removed.

The valve device 1 of the present invention resolves the drawbacks encountered in the prior art and offers considerable advantages.

Firstly, the device of the present invention is easily accessible from the outside as it can be opened simply and rapidly. Consequently, parts and components particularly liable to wear, or to the accumulation of solid materials, such as for example the valves and the valve chamber, can be directly inspected, replaced and/or appropriately cleaned without there being the need for specialised technical assistance, which can be called only when the problems encountered in the malfunctioning device are of a different entity to the above-mentioned problems. In particular, the composite structure of the body of the device enables the operators in the sector immediately to reach the zones which are most subject to malfunctioning, and to intervene in case where the entity of the problem requires replacement and/or usual device maintenance.

Also, it is worthy of note that the opening and/or the closing of the body of the device can be performed simply by acting directly on the means for blocking, without there being any need for tools and/or special equipment. In other words, the device can be opened directly and manually by anybody.

The means for blocking are advantageously also provided with a safety catch which keeps the blocking lever in the blocking position, preventing the lever from displacing accidentally into the unblocked position, such as for example after an impact with an agricultural vehicle.

Also worthy of note is the fact that a light emitter associated to each actuator organ enables the operator to verify whether any eventual fault in the functioning of the above-mentioned devices are due to electrical supply faults, possibly due to connection or cabling problems, or whether the faults concern mechanical and/or structural problems in the valve devices.

Naturally, both the immediate accessibility to the internal zones of the device and the immediate detection of problems connected with energy supply and/or mechanical organs considerably lower the costs normally attached to calling out specialised technical assistance.

## Claims

1. A valve device (1) in particular for agricultural weed-killing activities, which device comprises:
a body (2);
a main conduit (3) predisposed internally of the body (2) and connectable to a supply source of at least a fluid, preferably a weedkiller;
a valve chamber (5) predisposed internally of the body (2), in fluid communication with the main conduit (3);
an outlet conduit (4) predisposed internally of the body (2), in fluid communication with the valve chamber (5);
a valve (6) arranged internally of the valve chamber (5), the valve (6) being commutable between a closed condition, in which the fluid in transit in the main conduit (3) does not flow through the outlet conduit (4), and an open condition, in which the fluid in transit through the main conduit (3) flows through the outlet conduit (4),
the body (2) comprising a first portion (2a) and a second portion (2b), engaged to one another in order to define the main conduit (3), the outlet conduit (4) and the valve chamber (5), the first portion (2a) and the second portion (2b) being mobile with respect to one another between a closed position, in which the valve chamber (5) is sealedly closed, and an open position, in which the valve chamber (5) is open and accessible from outside; the second portion (2b) being hinged to the first portion (2a), the second portion (2b) being rotatable between the closed position and the open position: the device further comprising means for blocking (15) which are operatively connected to the body (2) in order to maintain the second portion (2b) in the closed position; the means for blocking (15) comprising a blocking lever (16) which is operatively engaged to the first portion (2a) of the body (2), the blocking lever (16) being mobile between a blocking position, in which the blocking lever (16) at least partially adheres to the first portion (2a) and acts on the second portion (2b) in order to maintain the second portion (2b) in the closed position, and an unblocked position, in which the blocking lever (16 does not adhere to the first portion (2a) and the second portion (2b) is free to move; the device being **characterised in that** the blocking lever is hinged to the first portion (2a) of the body (2) in such a way as to be rotatable between the blocking position and the unblocked position.

2. The device of claim 1, wherein the means for blocking (15) further comprise a hook element (17) connected to the blocking lever (16) and engageable to the second portion (2b) in order to maintain the second portion (2b) in the closed position when the blocking lever (16) is in the blocking position.

3. The device of claim 2, wherein the hook element (17) is hinged to the blocking element (16).

4. The device of claim 3, wherein the hook element (17) is hinged to the blocking lever (16) at the hinge point of the blocking lever (16) to the first portion (2a).

5. The device of any one or more of claims from, 1 to 4, wherein the blocking lever (16) comprises a pair of arms (16a) developing parallel to one another, and joined by at least a crossbar (16b), the blocking lever (16) comprising at least a hinge pin (16c) extending between the arms (16a) on an opposite side to the crossbar (16b) and engaging at least a hinge seating afforded in the first portion (2a).

6. The device of claim 5, wherein the hook element (17) exhibits a pair of arms (17a) extending parallel to one another and each being rotatably engaged to a respective arm (16a) of the blocking lever (16) at the hinge pin (16c), each arm (17a) of the hook element (17) exhibiting, on an opposite side with respect to the blocking lever (16), a transversal terminal portion (17b) which is engaged to the transversal terminal portion (17b) of the other arm (17a) by means of a hook crosspiece (17c).

7. The device of any one or more of the claims from 1 to 6, wherein the means for blocking (15) comprise a safety catch (18) operatively engaged to the first portion (2a) of the body (2) in order to retain the blocking lever (16) in the blocking position.

8. The device of claim 7, wherein the safety catch (18) is mobile between an interfering position, in which it maintains the blocking lever (16) in the blocking position, and a disengaged position, in which the blocking lever (16) is free to move, the safety catch (18) being provided with at least an elastic means for recall which is predisposed to bring the safety catch (18) into the interfering position.

9. The device of claim 1 or any other claim or more of the preceding claims, wherein it comprises at least an actuator organ (13) which is operatively associable to the body (2) of the valve device (1), in order to commutate the valve (6) between the closed position and the open position thereof, the actuator organ (13) being provided with at least a light emitter (14), preferably a LED, the light emitter (14) switching on and off respectively in presence or absence of an electrical supply.

10. The device of claim 9, when it is appended to one or more of claims from 2 to 9, wherein the actuator organ (13) is operatively engaged to the second portion (2b) of the body (2) by means of the hook element (17) when the blocking lever (16) is in the blocking position.

## Patentansprüche

1. Ventilvorrichtung (1), insbesondere zur landwirtschaftlichen Unkrautbekämpfung, welche Vorrichtung enthält:
einen Körper (2);
eine Hauptleitung (3), vorgesehen im Inneren des Körpers (2) und anschliessbar an eine Speisequelle von wenigstens einer Flüssigkeit, vorzugsweise ein Unkrautvertilgungsmittel;
eine Ventilkammer (5), vorgesehen im Inneren des Körpers (2), die in Flüssigkeitsverbindung mit der Hauptleitung (3) steht;
eine Ablassleitung (4), vorgesehen im Inneren des Körpers (2), die in Flüssigkeitsverbindung mit der Ventilkammer (5) steht;
ein Ventil (6), angeordnet im Inneren der Ventilkammer (5), wobei das Ventil (6) umschaltbar ist zwischen einem geschlossenen Zustand, in welchem die durch die Hauptleitung (3) laufende Flüssigkeit nicht durch die Ablassleitung (4) fliesst, und einem geöffneten Zustand, in welchem die durch die Hauptleitung (3) laufende Flüssigkeit durch die Ablassleitung (4) fliesst,
wobei der Körper (2) einen ersten Abschnitt (2a) und einen zweiten Abschnitt (2b) enthält, die miteinander verbunden sind, um die Hauptleitung (3), die Ablassleitung (4) und die Ventilkammer (5) zu beschreiben, und wobei der erste Abschnitt (2a) und der zweite Abschnitt (2b) im Verhältnis zueinander beweglich sind zwischen einer geschlossenen Position, in welcher die Ventilkammer (5) abdichtend geschlossen ist, und einer geöffneten Position, in welcher die Ventilkammer (5) offen und von aussen zugänglich ist; wobei der zweite Abschnitt (2b) an den ersten Abschnitt (2a) angelenkt ist und der zweite Abschnitt (2b) zwischen der geschlossenen Position und der geöffneten Position drehbar ist; wobei die Vorrichtung ausserdem Blockiermittel (15) enthält, welche betrieblich an den Körper (2) angeschlossen sind, um den zweiten Abschnitt (2b) in der geschlossenen Position zu halten;
wobei die Blockiermittel (15) einen Blockierhebel (16) enthalten, welcher betrieblich an dem ersten Abschnitt (2a) des Körpers (2) greift, wobei der Blockierhebel (16) beweglich ist zwischen einer Blockierposition, in welcher der Blockierhebel (16) wenigstens teilweise an dem ersten Abschnitt (2a) anliegt und auf den zweiten Abschnitt (2b) wirkt, um den zweiten Abschnitt (2b) in der geschlossenen Position zu halten, und einer freigegebenen Position, in welcher der Blockierhebel (16) nicht an dem ersten Abschnitt (2a) anliegt und der zweite Abschnitt (2b) sich frei bewegen kann; wobei die Vorrichtung **dadurch gekennzeichnet ist, dass** der Blockierhebel auf solche Weise an den ersten Abschnitt (2a) des Körpers (2) angelenkt ist, dass er zwischen der Blockierposition und der freigegebenen Position drehbar ist.

2. Vorrichtung nach Patentanspruch 1, bei welcher die Blockiermittel (15) ausserdem ein Hakenelement (17) enthalten, angeschlossen an den Blockierhebel (16) und einhakbar an dem zweiten Abschnitt (2b), um den zweiten Abschnitt (2b) in der geschlossenen Position zu halten, wenn sich der Blockierhebel (16) in der Blockierposition befindet.

3. Vorrichtung nach Patentanspruch 2, bei welcher das Hakenelement (17) an das Blockierelement (16) angelenkt ist.

4. Vorrichtung nach Patentanspruch 3, bei welcher das Hakenelement (17) an den Blockierhebel (16) angelenkt ist, und zwar an dem Anlenkpunkt des Blockierhebels (16) an dem ersten Abschnitt (2a).

5. Vorrichtung nach einem oder mehreren der Patentansprüche von 1 bis 4, bei welcher der Blockierhebel (16) ein Paar von Armen (16a) enthält, die sich parallel zueinander erstrecken und durch wenigstens eine Querstange (16b) miteinander verbunden sind, wobei der Blockierhebel (16) wenigstens einen Scharnierzapfen (16c) enthält, der sich auf der entgegengesetzten Seite von der Querstange (16b) zwischen den Armen (16a) erstreckt und wenigstens in einen Scharniersitz greift, aufgewiesen in dem ersten Abschnitt (2a).

6. Vorrichtung nach Patentanspruch 5, bei welcher das Hakenelement (17) ein Paar von Armen (17a) aufweist, die sich parallel zueinander erstrecken und jeder drehbar an einem jeweiligen Arm (16a) des Blockierhebels (16) durch den Scharnierzapfen (16c) gehalten ist, wobei jeder Arm (17a) des Hakenelementes (17) an einer im Verhältnis zu dem Blockierhebel (16) entgegengesetzten Seite einen querverlaufenden Endabschnitt (17b) aufweist, welcher an dem querverlaufenden Endabschnitt (17b) des anderen Armes (17a) mit Hilfe eines Hakenquerstücks (17c) befestigt ist.

7. Vorrichtung nach einem oder mehreren der Patentansprüche von 1 bis 6, bei welcher die Blockiermittel (15) eine Sperrklinke (18) enthalten, die betrieblich in den ersten Abschnitt (2a) des Körpers (2) greift, um den Blockierhebel (16) in der Blockierposition zu halten.

8. Vorrichtung nach Patentanspruch 7, bei welcher die Sperrklinke (18) beweglich ist zwischen einer Eingriffsposition, in welcher sie den Blockierhebel (16) in der Blockierposition hält, und einer freigegebenen Position, in welcher sich der Blockierhebel (16) frei bewegen kann, wobei die Sperrklinke (18) mit wenigstens einem elastischen Rückholmittel versehen ist, dazu bestimmt, die Sperrklinke (18) wieder in die Eingriffsposition zu bringen.

9. Vorrichtung nach Patentanspruch 1 oder nach jedem anderen Patentanspruch oder nach mehreren der vorstehenden Patentansprüche, bei welcher diese wenigstens einen Stellantrieb (13) enthält, der betrieblich mit dem Körper (2) der Ventilvorrichtung (1) verbindbar ist, um das Ventil (6) zwischen der geschlossenen Position und der geöffneten Position desselben umzuschalten, wobei der Stellantrieb (13) mit wenigstens einem Lichtemitter (14) versehen ist, vorzugsweise einer "LED", und wobei der Lichtemitter (14) jeweils bei Vorhandensein oder Fehlen einer Stromzufuhr an- und abschaltet.

10. Vorrichtung nach Patentanspruch 9, wenn abhängig von einem oder mehreren der Patentansprüche von 2 bis 9, bei welcher der Stellantrieb (13) betrieblich mit dem zweiten Abschnitt (2b) des Körpers (2) verbunden ist, und zwar mit Hilfe des Hakenelementes (17), wenn sich der Blockierhebel (16) in der Blockierposition befindet.

## Revendications

1. Dispositif de soupape (1), en particulier pour usage agricole de désherbage, lequel dispositif comprend:
- un corps (2);
- un conduit principal (3) prédisposé à l'intérieur du corps (2) et pouvant être connecté à une source d'alimentation d'au moins un fluide, préférablement un désherbant;
- une chambre de soupape (5) prédisposée à l'intérieur du corps (2), en communication fluide avec le conduit principal (3);
- un conduit de sortie (4) prédisposé à l'intérieur du corps (2), en communication fluide avec la chambre de soupape (5);
- une soupape (6) disposée à l'intérieur de la chambre de soupape (5), la soupape (6) pouvant être commutée entre une position fermée, dans laquelle le fluide en transit dans le conduit principal (3) ne s'écoule pas au travers du conduit de sortie (4), et une position ouverte, dans laquelle le fluide en transit au travers du conduit principal (3) s'écoule au travers du conduit de sortie (4),
le corps (2) comprenant une première portion (2a) et une seconde portion (2b), réciproquement engagées de manière à définir le conduit principal (3), le conduit de sortie (4) et la chambre de soupape (5), la première portion (2a) et la seconde portion (2b) étant mobiles l'une par rapport à l'autre entre une position fermée,
dans laquelle la chambre de soupape (5) est fermée de manière étanche, et une position ouverte, dans laquelle la chambre de soupape (5) est ouverte et accessible de l'extérieur; la seconde portion (2b) étant articulée sur la première portion (2a), la seconde portion (2b) étant pivotante entre la position fermée et la position ouverte; le dispositif comprenant de plus des moyens de blocage (15) opérationnellement connectés au corps (2) de manière à maintenir la seconde portion (2b) dans la position fermée; les moyens de blocage (15) comprenant un levier de blocage (16) opérationnellement engagé à la première portion (2a) du corps (2), le levier de blocage (16) étant mobile entre une position de blocage,
dans laquelle le levier de blocage (16) adhère au moins partiellement à la première portion (2a) et agit sur la seconde portion (2b) de manière à maintenir la seconde portion (2b) dans la position fermée, et une position débloquée, dans laquelle le levier de blocage (16) n'adhère pas à la première portion (2a) et la seconde portion (2b) est libre de se mouvoir; le dispositif étant **caractérisé en ce que** le levier de blocage est articulé sur la première portion (2a) du corps (2) de manière à pouvoir pivoter entre la position de blocage et la position débloquée.

2. Dispositif selon la revendication 1, dans lequel les moyens de blocage (15) comprennent de plus un élément d'accrochage (17) connecté au levier de blocage (16) et pouvant engager la seconde portion (2b) de manière à maintenir la seconde portion (2b) dans la position fermée lorsque le levier de blocage (16) se trouve dans la position de blocage.

3. Dispositif selon la revendication 2, dans lequel l'élément d'accrochage (17) est articulé sur l'élément de blocage (16).

4. Dispositif selon la revendication 3, dans lequel l'élément d'accrochage (17) est articulé sur le levier de blocage (17) en correspondance du point d'articulation du levier de blocage (16) sur la première portion (2a).

5. Dispositif selon n'importe laquelle des revendications 1 à 4, dans lequel le levier de blocage (16) comprend un paire de bras (16a) se développant parallèlement entre eux, et joints par au moins une traverse (16b), le levier de blocage (16) comprenant au moins un axe d'articulation (16c) s'étendant entre les bras (16a) sur un côté opposé à la traverse (16b) et engageant au moins un logement d'articulation formé dans la première portion (2a).

6. Dispositif selon la revendication 5, dans lequel l'élément d'accrochage (17) présente une paire de bras (17a) s'étendant parallèlement entre eux et étant chacun engagés en rotation sur un respectif bras (16a) du levier de blocage (16) en correspondance de l'axe d'articulation (16c), chaque bras (17a) de l'élément d'accrochage (17) présentant, sur un côté opposé par rapport au levier de blocage (16), une portion terminale transversale (17b) engagée sur la portion terminale transversale (17b) de l'autre bras (17a) au moyen d'une traverse d'accrochage (17c).

7. Dispositif selon n'importe laquelle des revendications 1 à 6, dans lequel les moyens de blocage (15) comprennent une butée de sécurité (18) opérationnellement engagée sur la première portion (2a) du corps (2) de manière à retenir le levier de blocage (16) dans la position de blocage.

8. Dispositif selon la revendication 7, dans lequel la butée de sécurité (18) est mobile entre une position d'interférence, dans laquelle elle maintient le levier de blocage (16) dans la position de blocage, et une position désengagée, dans laquelle le levier de blocage (16) est libre de bouger, la butée de sécurité (18) étant pourvue d'au moins un moyen élastique de rappel prédisposé pour amener la butée de sécurité (18) dans la position d'interférence.

9. Dispositif selon la revendication 1 ou n'importe laquelle des revendications précédentes, dans lequel il comprend au moins un organe actionneur (13) opérationnellement associé au corps (2) du dispositif de soupape (1), de manière à commuter la valve (6) entre sa position fermée et sa position ouverte, l'organe actionneur (13) étant pourvu d'au moins un émetteur de lumière (14), préférablement une LED, l'émetteur de lumière (14) s'allumant et s'éteignant respectivement en présence ou en l'absence d'alimentation électrique.

10. Dispositif selon la revendication 9, lorsqu'il dépend de une ou plusieurs des revendications 2 à 9, dans lequel l'organe actionneur (13) est opérationnellement engagé sur la seconde portion (2b) du corps (2) au moyen de l'élément d'accrochage (17) lorsque le levier de blocage (16) se trouve dans la position de blocage.
